(19) Europäisches Patentamt
European Patent Office
Office européen des brevets

(11) Publication number: 0 391 162 A2

# EUROPEAN PATENT APPLICATION

(21) Application number: 90105481.7

(22) Date of filing: 23.03.90

(51) Int. Cl.[5]: C08L 83/06, C09D 183/06

The title of the invention has been amended (Guidelines for Examination in the EPO, A-III, 7.3).

(30) Priority: 03.04.89 US 332646

(43) Date of publication of application: 10.10.90 Bulletin 90/41

(84) Designated Contracting States: BE DE ES FR GB IT NL SE

(71) Applicant: GENERAL ELECTRIC COMPANY
1 River Road
Schenectady, NY 12345(US)

(72) Inventor: Eckberg, Richard Paul
10 Fifth Avenue
Saratoga Springs, N.Y. 12866(US)
Inventor: Riding, Karen Dorothy
21 Bellwood Way
Castleton, N.Y. 12033(US)

(74) Representative: Schüler, Horst, Dr. et al
Kaiserstrasse 69
D-6000 Frankfurt/Main 1(DE)

(54) **Systems of polyols and ultraviolet radiation-curable epoxy silicones.**

(57) Ultraviolet radiation-curable coating compositions are described which comprise:

(A) an epoxyfunctional diorganopolysiloxane having the general formula $R_2R'SiO(RR'SiO)_xSiR_2R'$,
where each R individually is an alkyl group having from 1 to 8 carbon atoms, each R′ individually is R or a monovalent epoxyfunctional organic radical having from 2 to 20 carbon atoms with the proviso that at least 2 R′ radicals are monovalent epoxyfunctional organic radicals and x has a value from 0 to 20;

(B) a compound having at least one alcoholic or phenolic hydroxyl group in an amount providing not more than about 1.5 hydroxyl group per epoxy group of the diorganopolysiloxane; and

(C) a catalytic amount of a photocatalyst or a combination of photocatalysts.

EP 0 391 162 A2

# ULTRAVIOLET RADIATION-CURABLE EPOXY SILICONES/POLYOL SYSTEMS

This invention relates to silicone coating compositions and more particularly it relates to epoxyfunctional, ultraviolet (UV) radiation-curable polysiloxane compositions comprising a compound having at least one alcoholic or phenolic hydroxy group to modify the surface properties of the cured compositions.

## BACKGROUND OF THE INVENTION

Silicone compositions have become widely accepted as coatings for a variety of substrates and applications because of their unusual surface characteristics. Such coatings include protective coatings and also release coatings which are useful to provide a surface or material which is relatively non-adherent to other materials which would normally adhere closely thereto. Silicone release compositions may be used as coatings which release pressure sensitive adhesives for labels, decorative laminates, transfer tapes, etc. Silicone release coatings on paper, polyethylene, Mylar, and other such substrates are also useful to provide non-stick surfaces for food handling and industrial packaging.

Previously developed silicone coatings typically have been sold as dispersions of reactive high molecular weight polysiloxane gums in organic solvents. A curing or cross-linking catalyst is added to the dispersed, low-solids mixture, the mixture is applied to a substrate, and the coated substrate is passed through an oven to evaporate the carrier solvent and cure the silicones.

The large thermal energy input required to evaporate the solvents and allow proper curing (cross-linking) at commercially viable rates often makes heat-curable systems costly or burdensome to use. High energy costs and strict environmental regulation of solvent emissions make the use of solvent-borne silicone coating compositions uneconomical for some applications. While solventless or emulsion borne silicone coating compositions address the environmental problems, high oven temperatures and expensive energy usage are not eliminated.

To overcome the disadvantages of heat-curable compositions, radiation-curable silicone release compositions have been developed. Ultraviolet (UV) radiation is one of the most widely used types of radiation because of its low cost, ease of maintenance, and low potential hazard to industrial users. Typical curing times are much shorter, and heat-sensitive materials can be safely coated and cured with UV radiation whereas thermal energy might damage the substrate.

Several UV-curable silicone systems are known: U.S. Pat. Nos. 3,816,282 (Viventi); 4,052,059 (Bokerman et al); and 4,070,526 (Colquhoun et al) describe compositions wherein omega-mercaptoalkyl substituted polysiloxanes react with vinyl-functional siloxanes when exposed to UV radiation in the presence of certain photosensitizers. The compositions, however, often require scarce or expensive starting materials, have unserviceably slow cure rates, or emit offensive odors which persist in the cured products.

UV-curable silicone resins with epoxy or acrylic functionality have been found recently to have the high degree of reactivity necessary to make them suitable for release applications in particular, while avoiding the disadvantages of other UV-curable systems. Silicone release compositions such as those described in U.S. Pat. No. 4,279,717 (Eckberg et al) and U.S. Pat. No. 4,576,999 (Eckberg) are especially advantageous for their rapid curing in the presence of certain onium salt or free-radical type photocatalysts.

Such release coatings generally exhibit exceptionally low, or "premium", release, that is, very little force is required to separate most adhesives from the silicone treated surface. However, many commercial applications demand higher (or "tighter") release from common pressure-sensitive adhesives, and additives, called "controlled release additives" (or CRAs) have been developed which may be added to low-release compositions to raise their release.

U.S. Pat. Nos. 4,123,604 (Sandford, Jr.) and 3,527,659 (Keil), describe release-increasing CRAs based on MQ and vinyl-MQ resins for use with heat-curable silicone release systems. However, there is a need for controlled release additives which can provide different ranges of release, as required, in ultraviolet radiation-curable systems, and particularly in the aforementioned epoxy-functional polysiloxane compositions.

The use of epoxy monomers as controlled release additives is taught in U.S. Pat. No. 4,547,431 (Eckberg). The use of aromatic acid modified epoxy silicone compositions as controlled release additives is described in EP-A-0334068.

The use of epoxy silicones which also incorporate phenolic groups in the same polysiloxane is disclosed in EP-A-0355381.

Although these systems provide significant capability to modify the properties of surfaces formed when the compositions are cured, the use of even rather substantial quantities of these additives may not "tighten" release to the extent desired for some applications. In addition, the limited physical property characteristics of cured films of such unfilled, highly cross-linked silicone compositions leads to their having somewhat limited utility for other coatings applications.

It has now been discovered that when UV-curable epoxy silicone compositions are modified by the addition of hydroxy compounds such as monohydric or polyhydric alcohols or phenols significant changes in surface and bulk properties of the cured materials are observed.

## SUMMARY OF THE INVENTION

Accordingly, it is an object of the present invention to provide silicone coating compositions which are UV-curable for preparing coatings with improved properties.

It is another object of the present invention to provide solventless silicone base coating systems which are particularly suited for release coating applications.

It is a further object of the present invention to provide silicone based coating compositions which exhibit reduced or tighter release characteristics in release coatings than have heretofore been available.

These and other objects are accomplished by an ultraviolet radiation-curable coating composition comprising

(A) an epoxyfunctional diorganopolysiloxane having the general formula $R_2R'SiO(RR'SiO)_xSiR_2R'$, where each R individually is an alkyl group having from 1 to 8 carbon atoms, each R′ individually is R or a monovalent epoxyfunctional organic radical having from 2 to 20 carbon atoms with the proviso that at least 2 R′ radicals are monovalent epoxyfunctional organic radicals and x has a value from 0 to 20;

(B) a compound having at least one alcoholic or phenolic hydroxyl group in an amount providing not more than about 1.5 hydroxyl group per epoxy group of the diorganopolysiloxane; and

(C) a catalytic amount of a photocatalyst or a combination of photocatalysts.

The preparation of the aforementioned compositions and inclusion of additives therein to enhance certain properties of the compositions is also contemplated by the present invention.

## DETAILED DESCRIPTION OF THE INVENTION

The coating compositions contemplated by the present invention are prepared by dissolving or dispersing a compound having at least one alcoholic or phenolic hydroxy group such as an alcohol, a polyol, a phenol, a polyphenol, or a mixture thereof in an ultraviolet radiation-curable epoxyfunctional silicone composition. The hydroxyfunctional additives of the invention may be used with the ultraviolet radiation-curable epoxy silicone compositions of the prior art to tighten the release properties of the cured coatings therefrom. Suprisingly, the use of hydroxyfunctional compounds with comparatively low molecular weight epoxyfunctional silicone compositions also gives rise to coatings having usefulrelease properties.

The ultraviolet radiation-curable, epoxyfunctional silicone compositions suitable for use in conjunction with the hydroxyfunctional additives described herein include the type disclosed in U.S. Pat. No. 4,279,717 (Eckberg et al) and U.S. Pat. No. 4,576,999 (Eckberg) which are incorporated herein by reference. The preferred compositions comprise epoxyfunctional polydiorganosiloxane silicone fluids which are UV-curable when combined with catalytic onium salts (described infra).

The preferred epoxyfunctional polydiorganosiloxane silicone fluids are substantially linear dialkylepoxy-chainstopped polydialkylsiloxane copolymers optionally comprising internal alkyl epoxysiloxy units wherein the alkyl groups are lower alkyl, preferably methyl. Substantially linear trialkylsiloxy-endstopped polysiloxane copolymers which comprise at least two internal epoxyfunctional siloxy units are also within the scope of the invention but are less preferred. The epoxyfunctionality is obtained when the hydrogen atoms of a 1,1,3,3-tetraalkyldisiloxane, a dialkylhydrogensiloxy-endstopped polydialkylsiloxane or polydialkyl-alkylhydrogen-siloxane copolymer, or a trialkylsiloxy-endstopped polydialkyl-alkylhydrogensiloxane copolymer comprising at least two alkylhydrogen siloxy groups are reacted in a hydrosilation addition reaction with organic molecules which contain both ethylenic unsaturation and epoxide functionality. Such ethylenically unsaturated species will add to a polyhydroalkylsiloxane to form a copolymer in the presence of catalytic amounts of a precious metal catalyst, platinum in particular.

The vinyl- or allyl-functional epoxides contemplated are any of a number of aliphatic (glycidyl) or cycloaliphatic epoxy compounds having olefinic moieties which will readily undergo addition reactions with SiH-functional groups. Commercially obtainable examples of such compounds include allyl glycidyl ether, methallyl glycidyl ether, 1-methyl-4-isopropenyl cyclohexeneoxide (limoneneoxide; SCM Corp.), 2,6-dimethyl-2-3-epoxy-7-octene (SCM Corp.), 1,4-dimethyl-4-vinylcyclohexeneoxide (Viking Chemical Co.), and vinyl cyclohexene monoxide. Vinyl cyclohexene oxide is preferred.

The precious metal catalyst for the hydrosilation reactions involved in preparing the epoxy functional silicones used in the present invention may be selected from the group of platinum-metal complexes which includes complexes of ruthenium, rhodium, palladium, osmium, iridium and platinum as is well-known in the art.

The alcoholic or phenolic hydroxy-containing compound useful in the present invention may be any liquid or solid organic compound having a hydroxy functionality of at least 1 which is soluble in the epoxyfunctional siloxane. When the hydroxy-containing compound is liquid, it may be only partially or slightly miscible with the epoxyfunctional polysiloxane so long as a well-stirred mixture of the two does not separate into two layers so quickly that it cannot be used before separation occurs. In some instances it is helpful to use a small amount of a miscible alcohol to "couple" or improve the mutual solubility of the epoxyfunctional polysiloxane with a polyol or polyphenol. Also, the hydroxy-containing organic compound should be free of other "active hydrogens". The term "active hydrogen" is well known and commonly used in the art, and as used herein it means active hydrogen determined by the method described by Zerewitinoff in J. Am. Chem. Soc., Vol. 49, 2181 (1927), incorporated herein by reference. Of course, the hydroxy-containing compound is also substantially free of groups which may be thermally or photolytically unstable; that is, the compound will not decompose or liberate volatile components at temperatures below about 100°C or in the presence of actinic light or electron beam radiation which may be encountered during the desired curing conditions for the photocopolymerizable composition of the invention.

The hydroxy group(s) of alcohols and polyols used in the practice of the invention are preferably primary or secondary. Many tertiary hydroxy groups are thermally unstable, and usually react with epoxy groups with difficulty at best. The molecular weight of the hydroxy-containing compound may vary from that of methanol to very high (e.g., one millon or more). The equivalent weight (i.e., number average equivalent weight) of the hydroxy-containing compound is preferably in the range of about 31 to 5000. When materials of higher equivalent weight are used they may tend to reduce the rate and extent of copolymerization. In addition, there is a tendency for higher molecular weight materials to be insufficiently compatible with epoxyfunctional siloxanes to allow preparation of good coatings according to the invention.

Representative examples of suitable organic compounds having a hydroxy functionality of 1 include alkanols, monoalkyl ethers of polyoxyalkyleneglycols, monoalkyl ethers of alkylene glycols, phenols, and others known to the art. Alcohols are particularly useful as coupling agents for systems in which polyols and the epoxy compounds are only sparingly soluble in each other.

Representative examples of useful monomeric polyhydroxy organic compounds include alkylene glycols (e.g., 1,2-ethanediol, 1,2- and 1,3-propanediol, 1,4-butanediol, 2-ethyl-1,6-hexanediol, bis-(hydroxymethyl)cyclohexane, 1,18-dihydroxyoctadecane, 3-chloro-1,2-propanediol), polyhydroxyalkanes (e.g., glycerine, trimethylolethane, pentaerythritol, sorbitol) and other polyhydroxy compounds such as 2-butyne 1,4-diol, 4,4′-bis(hydroxymethyl)diphenylsulfone, castor oil, bisphenol A, etc.

Representative examples of useful polymeric hydroxy-containing compounds include polyoxyethylene and polyoxypropylene glycols and triols of molecular weights from about 200 to about 10,000, corresponding to equivalent weight of 200 to 5000 for the diols or 70 to 3300 for triols; polytetramethylene glycols of varying molecular weight; copolymers of hydroxypropyl and hydroxyethyl acrylates and methacrylates with other free radical-polymerizable monomers such as acrylate esters, vinyl halides, or styrene; copolymers containing pendant hydroxy groups formed by hydrolysis or partial hydrolysis of vinyl acetate copolymers, polyvinylacetal resins containing pendant hydroxyl groups modified cellulose polymers such as hydroxyethylated and hydroxypropylated cellulose; hydroxy-terminated polyesters and hydroxy-terminated polylactones; and hydroxy-terminated polyalkadienes.

Useful commercially available polyhydroxy-containing materials include hydroxy-stopped polybutadienes such as Sartomer R-45 HT, the "Polymeg" R series (available from Quaker Oats Company) of polytetramethylene ether glycols such as "Polymeg" 650, 100 and 2000; "PeP" (available from Wyandotte Chemicals Corporation) of polyoxyalkylene tetrols having secondary hydroxyl groups such as "PeP" 450, 550 and 650; "Butvar" series (available from Monsanto Chemical Company) of polyvinylacetal resins such as "Butvar" B-72A, B-73, B-76, B-90 and B-98; and "Formvar" 7/70, 12/85, 7/95S, 7/95E, 15/95S and 15/95E; "PCP" series (available from Union Carbide) of polycaprolactone polyols such as "PCP" 0200, 0201, 0230, 0240, 0300; "Paraplex U-148" (available from Rohm and Hass), an aliphatic

polyester diol; "Multron" R series (available from Mobay Chemical Co.) of saturated polyester polyols such as "Multron" R-2, R-12A, R-16, R-18, R-38, R-68 and R-74, "Klucel E" (available from Hercules Inc.) a hydroxypropylated cellulose having an equivalent weight of approximately 100; and "Alcohol Soluble Butyrate" (available from Eastman Kodak) a cellulose acetate butyrate ester having a hydroxyl equivalent weight of approximately 400.

Other hydroxy-containing compounds useful in the present invention include polysiloxanes having pendant or terminal organic hydroxy functionalities. Typical are materials such as dicarbinol-chainstopped polydimethylsiloxanes having the nominal structure:

$(HOCH_2C(C_2H_5)CH_2O(CH_2)_3Si(CH_3)_2O[Si(CH_3)_2]_x\text{-}Si(CH_3)_2(CH_3)(CH_2)_3OCH_2C(C_2H_5)(CH_2OH)_2$

or the nominal structure:

$HOCH_2CH(OH)CH_2O(CH_2)_3Si(CH_3)_2O[Si(CH_3)_2]_x\text{-}Si(CH_3)_2(CH_2)_3OCH_2CH(OH)CH_2OH$

where x has a value from about 2 to 100 or more, or silicone polymers of the general formula

$$(CH_3)_3SiO-(\underset{\underset{P}{|}}{\overset{\overset{CH_3}{|}}{Si}}O)_y-[Si(CH_3)_2O]_x-Si(CH_3)_3$$

where P =

$HO\text{-}[CH_2CH(CH_3)O]_a\text{-}(CH_2CH_2O)_b\text{-}(CH_2)_3\text{-}$

and x has values from 0 to 100 or more, y has a value of at least 2, preferably 3 or more, and a and b have values from 0 to 50 or more with the proviso that the sum a + b must be at least 1; and phenolic-functional polysiloxanes such as polysiloxanes having the nominal formula below where Ph is a 1,4-phenylene group and x has a value from 0 to 50 or more.

$HO\text{-}Ph\text{-}C(CH_3)_2\text{-}Ph\text{-}O\text{-}[(CH_3)_2SiO]_x\text{-}Ph\text{-}C(CH_3)_2\text{-}Ph\text{-}OH$

The amount of hydroxy-containing material used in the compositions of the invention may vary over broad ranges, depending upon factors such as the compatibility of the hydroxy-containing material with the epoxy-functional polysiloxane, the equivalent weight and fucntionality of the hydroxy-containing material, the physical properties desired in the final cured composition, the desired speed of photocure, etc.

Generally speaking, with increasing amounts of hydroxy-containing material in the composition the rate of cure decreases, and the cured product exhibits improved impact resistance and flexibility, and correspondingly there is a gradual decrease in hardness, tensile strength and solvent-resistance.

Although both mono- and polyfunctional hydroxy-containing compounds provide desirable results in the compositions of the invention, use of the polyfunctional hydroxy-containing compounds is preferred for a majority of applications because the monofunctional nature of alcohols gives them chain-terminating characteristics. Mono-functional hydroxy-containing compounds are particularly useful however in providing low viscosity, solvent free coating compositions and in effecting solution or improved dispersion of otherwise inadequately compatible mixtures of epoxy-functional polysiloxane and polyhydroxy compounds. When using hydroxy-containing compounds having a functionality significantly less than 2 (e.g., to 1 to 1.5), amounts greater than about 0.5 equivalent of hydroxyl per equivalent of epoxy tend to provide compositions which are generally slow or difficult to cure. Further, the cured compositions may be low in internal strength and tensile strength and are susceptible to solvent attack, and consequently may be unsuitable for many applications. The lower molecular weight alcohols are volatile under the UV curing conditions employed in the invention, and their use is not preferred. Alcohols should have atmospheric boiling points greater than about 100 °C for best results in the practice of the invention.

When the amount of monofunctional hydroxyl exceeds about 0.5 equivalent per equivalent of epoxy cure to a useful coating becomes difficult or impossible because monofunctional compounds act as chain-terminators in the curing reaction. When a polyhydroxy compound is used it may be used in larger amounts, depending upon the properties desired in the cured composition. As the ratio of hydroxyl to epoxy exceeds one, significant chain termination is observed with polyhydroxy compounds as well. In general this effect becomes significant when the ratio becomes about 1.5:1. Thus the ratio of equivalents of polyhydroxy-compound to equivalents of epoxide may vary from about 0.001/1 to about 1.5/1.

Mixtures of hydroxy-containing materials may be used, when desired. For example, one may use mixtures of two or more poly-functional hydroxy compounds, one or more mono-functional hydroxy compounds with a polyhydroxy compound, etc.

The mixtures of hydroxy-containing materials and epoxyfunctional silicones are made UV-curable by combination with a catalytic amount of a photocatalyst (photoinitiator), suitable examples of which are known to persons skilled in the art. Preferred photoinitiators for the present epoxyfunctional silicone compositions are the onium salts having the formulae:

$R_2I^+ MX_n-$
$R_3S^+ MX_n-$
$R_3Se^+ MX_n-$
$R_4P^+ MX_n-$
$R_4N^+ MX_n-$

where radicals represented by R can be the same or different organic radicals of from 1 to 30 carbon atoms, including aromatic carbocyclic radicals of from 6 to 20 carbon atoms which can be substituted with from 1 to 4 monovalent radicals selected from $C_{(1-8)}$ alkoxy, $C_{(1-8)}$ alkyl, nitrogen, chloro, bromo, cyano, carboxy, mercapto, etc. and also including aromatic heterocyclic radicals including, e.g. pyridyl, thiophenyl, pyranyl, etc.; and $MX_n$- is a non-basic, non-nucleophilic anion, such as $BF_4$-, $PF_6$-, $AsF_6$-, $SbF_6$-, $SbCl_6$-, $HSO_4$-, $ClO_4$-, and the like.

Diaryl iodonium salts, such as bis(dodecylphenyl)iodonium hexafluoroarsenate and bis(dodecylphenyl)-iodonium hexafluoroantimonate, are most preferred.

The amount of catalyst employed is not critical, so long as proper polymerization is effected. As with any catalyst, it is preferable to use the smallest effective amount. In general, catalyst levels of from about 0.5%-5% by weight have been found suitable.

The coating compositions of the invention are applied to the substrate to be coated by conventional means. Examples of suitable substrates include, without limitation, paper, metals, foils, glass, polymer coated papers such as polyolefin coated kraft paper, polyolefin films such as polyethylene and polypropylene films, and polyester films.

The conditions required for curing the coatings of the invention may vary rather widely, in general depending on the characteristics of the equipment employed and the thickness of the coating being cured. In general, the addition of hydroxy-containing compounds tends to slow the rate of cure, i.e. requires more energy. Simple tests will generally suffice to determine optimum cure conditions for a particular application of a formulation.

Photopolymerization of the compositions of the invention occurs on exposure to a radiation source which emits at a wavelength within the ultraviolet and visible regions. Suitable sources include mercury, xenon, carbon arc and tungsten filament lamps, sunlight, etc. Exposures may be from less than 1 second to 10 minutes or more depending on the materials to be polymerized and the photocatalyst employed. Electron beam irradiation may also be used.

In order that persons skilled in the art may better understand the practice of the invention, the following Examples are provided by way of illustration and not by way of limitation.

## EXPERIMENTAL

### Table of Materials

Epoxide 1

1,3-bis[2-(3[7-oxabicyclo(4.1.0)heptyl])ethyl]tetramethyldisiloxane, described by E.P. Plueddemann et al., J. Amer. Chem. Soc., 81, 2632 (1959).

Epoxide 2

an equilibration product prepared by reacting an equimolar mixture of Epoxide 1 and octamethylcyclotetrasiloxane at 80° C in the presence of tetramethylammonium hydroxide as a catalyst until reaction is complete by GC analysis, then heating the mixture to 160° C with a nitrogen sparge to decompose the catalyst and strip any remaining cyclic siloxane. The product has the nominal structure below, where R′ is 3,4-epoxycyclohexyl-1-ethyl and x = 4.

$R'(CH_3)_2SiO[9CH_3)_2SiO]_xSi(CH_3)_2R'$

Epoxide 3

an equilibration product prepared in the same fashion as Epoxide 2, using a 1:2.5 molar mixture of Epoxide 1 and octamethylcyclotetrasiloxane. The product has the nominal structure shown for Epoxide 2, but where x = 10.

Epoxide 4

an equilibration product prepared in the same fashion as Epoxide 2, using a 1:4 molar mixture of Epoxide 1 and octamethylcyclotetrasiloxane. The product has the nominal structure shown for Epoxide 2, but where x = 16.

Epoxide 5

an epoxy-functionalsilicone polymer having an epoxy equivalent weight of about 770 having the nominal structure

$M'D_xD'_yM'$

where M′ represents epoxycyclohexylethyl dimethylsiloxy, D represents dimethylsiloxy, D′ represents epoxycyclohexylethyl methylsiloxy, x is about 65, and y is about 3.0-3.5.

Epoxide 6

an epoxy-functional polymer having an epoxy equivalent weight of about 900 having the nominal structure shown for Epoxide 5, but where x is about 95, and y is about 5.

Alcohol 1

1-octanol

Polyol 1

2-ethyl-1,3-hexanediol

Polyol 2

glycerine

Polyol 3

1,2,6-hexanetriol

Polyol 4

a hydroxy-stopped polybutadiene having a hydroxy equivalent weight of about 1250 and a viscosity of about 5100 cps at 30 °C (Sartomer R-45HT)

Polyol 5

a dicarbinol endstopped polysiloxane having the nominal formula

$(HOCH_2)_2C(C_2H_5)CH_2O(CH_2)_3Si(CH_3)_2O[Si(CH_3)_2]_{40}\text{-}Si(CH_3)_2(CH_3)(CH_2)_3OCH_2C(C_2H_5)(CH_2OH)_2$

Polyol 6

a dicarbinol-chainstopped polydimethylsiloxane having the nominal structure

$HOCH_2CH(OH)CH_2O(CH_2)_3Si(CH_3)_2O[Si(CH_3)_2]_{40}\text{-}Si(CH_3)_2(CH_2)_3OCH_2CH(OH)CH_2OH$

Polyol 7

a silicone-polyether copolymer having the nominal structure

$MD_xD'_yM$

where M is trimethylsiloxy, D is dimethylsiloxy, D′ is $HO[(CH_2CH[CH_3]O)_a(CH_2CH_2O)_b(CH_2)_3](CH_3)SiO$, where a + b = about 16, x is about 20, and y is about 3 .

Polyphenol 1

a polysiloxane having the nominal formula below where Ph is a 1,4-phenylene group and x is about 10 $HO\text{-}Ph\text{-}C(CH_3)_2\text{-}Ph\text{-}O\text{-}[(CH_3)_2SiO]_x\text{-}Ph\text{-}C(CH_3)_2\text{-}Ph\text{-}OH$

Polyphenol 2

a polysiloxane having the nominal formula shown for Polyphenol 1, but where x is about 25

Catalyst 1

a solution of bis(dodecylphenyl)iodonium hexafluoroantimonate in 2-ethyl-1,3-hexanediol containing 6% antimony

Catalyst 2

a 50% by weight solution of (4-octyloxyphenyl)phenyliodonium hexafluoroantimonate in 2-ethyl-1,3-hexanediol containing 2% 2-isopropylthioxanthone

Catalyst 3

a 50% by weight solution of (4-octyloxyphenyl)phenyliodonium hexafluoroantimonate in 2-ethyl-1,3-hexanediol

APPARATUS

Ultraviolet irradiation of onium catalyzed epoxysiloxane-hydroxy compound mixtures was carried out using an RPC Model QC1202 lab UV processor equipped with 2 Hanovia medium pressure mercury vapor lamps capable of independent operation at 100, 200, or 300 watt/inch power output, and with a conveyor which operated at speeds from 10 to 500 feet/minute. UV flux for a given pass under the lamps could be varied between 12 and 4500 mJ/cm², as measured by an International Light Photometer, using an A309 lightbug accessory.

PROCEDURES

In general, the UV flux was altered by adjusting lamp output and/or conveyor speed. Samples were generally coated on a polyethlyene coated kraft (PEK) paper in the thicknesses specified in the Examples. Smear was determined by rubbing the coating vigorously with the thumb or forefinger and visually inspecting the coating for disturbance. Migration was determined by applying a length of Scotch brand #610 tape to the sample, removing it, and then determining whether the adhesive side of the tape will stick to itself. When migration occurred, thus coating the tape with the material under test, little or no sticking of the tape to itself is observed.

EXAMPLE 1

A one to one by weight mixture of Epoxide 1 and Polyol 7 (7.7:1 epoxide to hydroxyl equivalent ratio) was prepared. The mixture was hazy and separated into two phases after prolonged standing. The mixture was catalyzed with 3% Catalyst 1 and coated at a thickness of 1 mil on PEK paper. The coating was exposed to 600 watts power at a line speed of 200 feet per minute. The resulting coating did not smear when rubbed. A second portion of the catalyzed mixture was spread on a glass plate at a thickness of 6 mils and the coating was exposed to 600 watts at a line speed of 25 feet per minute. The resulting coating was a flexible film.

EXAMPLE 2

A mixture of Epoxide 1 and Polyol 2 was prepared having a 1:1 ratio of epoxide to hydroxyl equivalents (86:14 by weight). The mixture was catalyzed with 1% Catalyst 2. The resulting mixture was hazy and separated upon standing. A portion of the mixture (well mixed) was spread at a thickness of 0.5 mil on PEK paper and exposed to a power of 400 watts at a line speed of 100 feet per minute. The resulting film was smooth and tack free.

EXAMPLE 3

Epoxide 1 and Polyol 1 were mixed in proportions to yield a 1:1 ratio of epoxide to hydroxyl equivalents (73:27 by weight) and 1% Catalyst 2 was added to the clear, homogeneous mixture. The material was coated on PEK paper in a 2 mil layer and subjected to 200 watts power at a line speed of 100 feet per minute. The resulting product was a slightly tacky coating. A second sample 2 mils thick was exposed to 400 watts power at a line speed of 100 feet per minute and yielded a smooth tack free coating.

EXAMPLE 4

Two mixtures of Epoxide 1 and Polyol 5 were prepared, the first in proportions such that the epoxide to hydroxyl ratio was 1:2.55 (8:92 by weight), and the second such that the ratio was 1:1.16 (16:84 by weight). Both mixtures were catalyzed with 3% Catalyst 1. The mixtures were hazy and separated on standing. Well mixed samples of each were coated on PEK paper at a thickness of 0.5 mil and exposed to a lamp power of 600 watts at a line speed of 100 feet per minute. The first sample showed no cure and was given a second exposure and still showed no evidence of cure. The second sample smeared slightly so the test was repeated with another sample which was exposed to 600 watts power at 75 feet per minute. The cure at 75 feet per minute yielded a coating which showed no smear and no migration to #610 Scotch Tape. At the higher ratio of hydroxyl to epoxy it is evident that the amount of hydroxyl led to excessive chain termination and therefore no cure of the coating was obtained.

## EXAMPLE 5

Two mixtures of Epoxide 4 and Polyol 5 were prepared. In the first, the ratio of epoxide to hydroxyl was 1:2.6 (25:75 by weight). In the second sample the ratio was 1:1.3 (40:60 by weight). Both mixtures were slightly hazy but did not separate on standing. Each was catalyzed with 3% Catalyst 1. The first sample was exposed to 600 watts and 2 passes at 100 feet per minute at a thickness of 0.5 mil. No cure was observed. The second sample having the lower hydroxyl epoxy ratio was exposed to 400 watts power at 200 feet per minute and a 0.5 mil coating and cured to a smear and migration free coating. Again it is evident that at high hydroxyl to epoxide ratios the hydroxyl compound acts to terminate chains and little or no cure is obtained.

## EXAMPLE 6

Two mixtures of Epoxide 1 with Polyol 6 were prepared. The proportions were such that the first mixture had an Epoxide 5quivalent to hydroxyl equivalent ratio of 1:1.2 and the second a ratio of 1:1.6. Each mixture was catalyzed with 3% of Catalyst 1, the resulting solutions being hazy. On prolonged standing both mixtures separated into two layers. Well mixed samples of each were spread on PEK paper at a thickness of 0.5 mil. The first was exposed to 400 watts at a line speed of 100 feet per minute and yielded a coating which did not smear and showed no migration when tested with Scotch brand tape. The second sample was exposed to 400 watts power at a line speed of 400 feet per minute. The resulting coating showed a slight smearing tendency. The higher line speed and/or the elevated hydroxy content used in the second test resulted in less cure.

## EXAMPLE 7

Two mixtures of Epoxide 4 with Polyol 6 were prepared. In the first, the epoxide to hydroxyl ratio was 1:1.3 and the second 1:1.5. Each was catalyzed with 3% of Catalyst 1. The resulting mixtures were clear homogeneous blends. Each was spread at a thickness of 0.5 mils on PEK paper. The first preparation was exposed to 400 watts at a line speed of 200 feet per minute and yielded a coating which showed no smear and no migration. The second was exposed to 400 watts at a line speed of 400 feet per minute and also showed no migration.

## EXAMPLE 8

A mixture of Epoxide 1 and Polyol 4 was prepared which had an epoxide to hydroxyl ratio of 2:1 (23:73 by weight). It was catalyzed with 1% Catalyst 2. The mixture was slightly hazy but did not separate on prolonged standing. The mixture was coated at a thickness of 0.5 mil on PEK paper and the cure performance was determined by determining the maximum line speed at which the coating became tack- or migration-free. A line speed of 200 feet per minute was sufficient at 400 watts lamp power. The resulting coating was tack free, flexible and clear.

## EXAMPLE 9

A mixture of Epoxide 5 and Polyol 4 was prepared with an epoxide to hydroxyl equivalent ratio of 4:1, catalyzed at 2% with Catalyst 1, and gave an opaque mixture. It was coated on PEK paper at 0.5 mil and the line speed to obtain cure was determined at 400 watts power to be a line speed of 200 feet per minute. The resulting film was clear and gave easy release when tested with Scotch #610 tape.

EXAMPLE 10

Two mixtures of Epoxide 5 and Polyol 6 were prepared. In the first ratio of epoxide to hydroxyl was 1:1, in the second 2:1. Each mixture was catalyzed with 2% Catalyst 1 to yield hazy mixtures which did not separate on standing. The first mixture was exposed to 600 watts power at 100 feet per minute and yielded a clear tack free film which did show some migration when tested with Scotch #610 tape. The second sample was exposed to 600 watts at 300 feet per minute and yielded a clear tack free film which showed no migration when tested.

EXAMPLE 11

The compositions shown in Table 1 below were prepared and catalyzed with 1% Catalyst 3. Coatings 2 mils thick were then tested to determine the minimum UV dose need for cure with the results shown in the Table.

Table 1

| Mole Ratio Epoxy/Hydroxy | UV Dose for Cure, mJ/cm $^2$ |
|---|---|
| Epoxide 1/Polyol 1 | |
| 100/0 | 15 |
| 100/33 | 15 |
| 100/67 | 49 |
| 100/100 | 206 |
| Epoxide 2/Polyol 1 | |
| 100/0 | 29 |
| 100/16 | 23 |
| 100/33 | 41 |
| 100/50 | 60 |
| 100/66 | 61 |
| 100/83 | 132 |
| 100/100 | 213 |
| Epoxide 3/Polyol 1 | |
| 100/0 | 67 |
| 100/25 | 23 |
| 100/50 | 29 |
| 100/75 | 61 |
| 100/100 | 220 |

All of the compositions demonstrated very fast cure response even when the epoxy hydroxy ratio approached 1, although there was a noticable slowdown in rate as the hydroxy equivalents exceeded about half the epoxy equivalents.

EXAMPLE 12

The minimum dose for cure of a variety of mixtures of Epoxide 1 and Polyol 3 was examined. Coatings 2 mils thick of compositions catalyzed with 1% Catalyst 3 were prepared and the minimum dose for cure determined, with the results shown below. Although Polyol 3 is not very soluble in Epoxide 1, the blends

display rapid cure even at a relatively high hydroxy contents.

| Equivalent Ratio Epoxy/Hydroxy | UV Dose for Cure, mJ/cm $^2$ |
|---|---|
| 100/0 | 15 |
| 100/25 | 30 |
| 100/50 | 32 |
| 100/75 | 70 |
| 100/100 | 212 |

EXAMPLE 13

Mixtures of Epoxide 1 and Alcohol 1 were prepared in the ratios shown below and catalyzed with 1% of Catalyst 3. The minimum UV dose for cure was determined for each sample.

| Equivalent Ratio Epoxy/Hydroxy | UV Dose for Cure, mJ/cm $^2$ | |
|---|---|---|
| 100/0 | 15 | |
| 100/25 | 70 | |
| 100/50 | 140 | |
| 100/75 | 2700 | |
| 100/100 | greater than 5000 | (no cure) |

It is clear that at decreased epoxy/hydroxy ratios to amounts much less than an epoxy/hydroxy ratio of 2 the cure rate becomes very slow and at a 1:1 ratio no cure is observed. This is undoubtedly due to the chain terminating effect of the monofunctional alcohol.

EXAMPLE 14

A mixture was prepared of Epoxide 1, Polyol 3 and Alcohol 1 in an 8:1:1 by weight blend. The mixture was clear and was catalyzed with 1% Catalyst 3. A 2 mil film cured to a tough, translucent film when irradiated with a 70 mJ/cm$^2$ UV flux. This result demonstrates that small amounts of an alcohol may be used to improve the solubility of polyols without harmful effect on the properties of the resulting film.

EXAMPLE 15

Samples of various film compositions were prepared by pouring 20 gram portions of the compositions shown in Table 2 below catalyzed with 1% Catalyst 3 into six inch by six inch Teflon molds and permitting the fluid to spread evenly about the mold until air bubbles had disappeared. The molds were then passed through the UV processor twice at 20 feet/minute line speed using 400 watts lamp power. The resulting films, which were about 15-20 mils thick, were removed from the mold and turned over to expose the underside and passed once through the processor at 20 feet/minute and 400 watts lamp power. Tensile specimens were cut from the films where possible and tested for tensile strength and elongation at break on the Instron Tensiometer. The results are shown in Table 2.

Table 2

| Mole Ratio | Peak Tensile, | Elongation | Shore A |
|---|---|---|---|
| Epoxide 1: Polyol 1 | psi | | |
| 100/100 | (very low) | 100 | 50 |
| 100/80 | 111 | 62.4 | 56 |
| 100/60 | 643 | 29.1 | 35 |
| 100/40 | (very high) | 5 | 48 |
| 100/20 | (very high) | (very low) | 60 |
| 100/0 | (very high) | (very low) | 70 |
| Epoxide 2: Polyol 1 | | | |
| 100/100 | 8.6 | 20.2 | 63 |
| 100/83 | 18.4 | 18.7 | 56 |
| 100/66 | 17.1 | 14.5 | 56 |
| 100/50 | 28.2 | 10.5 | 55 |
| Epoxide 3: Polyol 1 | | | |
| 100/100 | 5.0 | 15.9 | 53 |
| 100/75 | 3.9 | 9.1 | 55 |
| 100/50 | 27.6 | 18.0 | 43 |
| Epoxide 1: Alcohol 1 | | | |
| 100/50 | 17.0 | 14.4 | 32 |
| 100/40 | 36.5 | 22.5 | 51 |
| 100/33 | 130.0 | 26.1 | 50 |
| 100/25 | 159. | 23.4 | 71 |

EXAMPLE 16

Mixtures of Epoxide 1 and Polyphenols 1 and 2 were prepared as shown in the tabulation below and catalyzed with 0.5% Catalyst 3. The mixtures were examined for degree of cure using 450 mJ/cm$^2$ UV flux with the results shown below.

| Formulation, equivalent ratio | Degree of cure |
|---|---|
| Epoxide 1/Polyphenol 1 | |
| 100/100 | poor cure - smears, tacky |
| 100/75 | cured - no smear |
| 100/50 | cured - no smear, no migration to tape |
| Epoxide 1/Polyphenol 2 | |
| 100/100 | poor cure - smears |
| 100/75 | cured - no smear, no migration to tape |
| | cured - no smear, no migration to tape |

It is clear that under the cure conditions used that at higher ratios the epoxide/polyphenol mixtures do not show good cure. As the ratio of epoxide to hydroxyl increases the cure improves. More aggressive cure conditions probably would secure better cure at the 1:1 ratio.

The samples which cured were then evaluated in the same manner as Example 15 with the result shown below.

| Formulation, Mole Ratio | Peak Tensile, Psi | Elongation | Shore A |
|---|---|---|---|
| Epoxide 1/Polyphenol 1 | | | |
| 100/75 | 145 | 7.1% | 90 |
| Epoxide 1/Polyphenol 2 | | | |
| 100/75 | 157 | 11.2% | 67 |
| 100/50 | 69 | 1.0% | 69 |

EXAMPLE 17

Various compositions of the invention were evaluated as release coatings. The compositions shown in Table 3 were prepared and catalyzed with 1% Catalyst 1, coated on PEK paper, and exposed to 450 mJ/cm$^2$ UV light. The coatings were laminated with Johnson & Johnson Surgical Tape and evaluated in accordance with TLMI standard test VIILD, 4-68 , using a 12"/min. pull at 180°, reported in g/in.

Table 3

| Formulation | Release, g/inch |
|---|---|
| Epoxide 6 (control) | 5-10 |
| Epoxide 1 (control) | too high to measure |
| Epoxide 1:Polyol 1 (100:75) | 200 |
| Epoxide 1:Polyol 1 (100;100) | 225 |
| Epoxide 4:Polyol 1 (100:100) | 50 |
| Epoxide 3:Polyol 1 (100:50) | 100-125 |
| Epoxide 2:Polyol 1 (100:50) | 75-100 |
| Epoxide 1:Polyphenol 2 (100:50) | 250-275 |
| Epoxide 1:Polyphenol 1 (100:75) | 225 |
| Epoxide 1:Polyphenol 1 (100:50) | 225-250 |

It is apparent that release coatings with a much tighter release than that of unmodified silicones and affording considerable ranges of tightness may be prepared using the compositions of the invention.

It is obvious that modifications and variations of the present invention are possible in light of the foregoing disclosure. It is to be understood that any incidental changes made in the particular embodiments of the invention as disclosed herein are within the intended scope of the invention as defined by the following claims.

## Claims

1. A photopolymerizable coating composition comprising:

(A) an epoxyfunctional diorganopolysiloxane having the general formula $R_2R'SiO(RR'SiO)_xSiR_2R'$, where each R individually is an alkyl group having from 1 to 8 carbon atoms, each R' individually is R or a

monovalent epoxyfunctional organic radical having from 2 to 20 carbon atoms with the proviso that at least 2 R′ radicals are monovalent epoxyfunctional organic radicals, and x has a value from 0 to 20;

(B) a compound having at least one alcoholic or phenolic hydroxyl group in an amount providing not more than about 1.5 hydroxyl group per epoxy group of the diorganopolysiloxane; and

(C) a catalytic amount of a photocatalyst or a combination of photocatalysts.

2. A coating composition according to claim 1 wherein the photocatalyst component is a diaryl iodonium salt.

3. A coating composition according to claim 1 wherein the monovalent epoxyfunctional organic radical is a cycloaliphatic epoxy-functional radical.

4. A coating composition according to claim 1 wherein the compound (B) having at least one hydroxyl group is a polyol.

5. A coating composition according to claim 1 wherein the compound (B) having at least one hydroxyl group is 2-ethyl-1,3-hexanediol.

6. A coating composition according to claim 1 wherein the compound (B) having at least one hydroxyl group is a monohydric alcohol in an amount providing not more than about 0.5 hydroxyl group per epoxy group of the diorganopolysiloxane.

7. A coating composition according to claim 1 wherein the compound (B) having at least one hydroxyl groupis a polyphenol in an amount providing not more than about 1 hydroxyl group per epoxy group of the diorganopolysiloxane.

8. A solid substrate coated on at least one surface with a coating composition comprising:

(A) an epoxyfunctional diorganopolysiloxane having the general formula $R_2R'SiO(RR'SiO)_xSiR_2R'$, where each R individually is an alkyl group having from 1 to 8 carbon atoms, each R′ individually is R or a monovalent epoxyfunctional organic radical having from 2 to 20 carbon atoms with the proviso that at least 2 R′ radicals are monovalent epoxyfunctional organic radicals, and x has a value from 0 to 20;

(B) a compound having at least one alcoholic or phenolic hydroxyl group in an amount providing not more than about 1.5 hydroxyl group per epoxy group of the diorganopolysiloxane; and

(C) a catalytic amount of a photocatalyst or a combination of photocatalysts.

9. A coated substrate as defined in claim 8 wherein said substrate is selected from the group comprising paper, metals, foils, glass, polymer coated papers, polyolefin films, and polyester films.

10. A coated substrate according to claim 8 wherein said coating composition has been cured on said substrate.